# DEMANDE DE BREVET EUROPEEN

(11) **EP 1 201 401 A2**
(43) Date de publication de la demande: **02.05.2002**
(21) Numéro de dépôt: 01402668.6
(22) Date de dépôt: 16.10.2001
(51) Int. Cl.: B29C 65/16, B29C 63/16

(54) **Dispositif pour fixer un revêtement sur un support en matière plastique**

(30) Priorité: 16.10.2000 FR 0013238
(71) Demandeur: Centre d'Etudes et Recherche pour l'Automobile ( CERA), 51100 Reims (FR)
(72) Inventeur: Noirot, Daniel, 02350 Liesse Notre Dame (FR)
(74) Mandataire: Geismar, Thierry

(57) **Abrégé**

Dispositif pour fixer un revêtement (1) sur un support (2) en matière synthétique préalablement formée, mais n'ayant subi aucun traitement de surface préalable, du type comprenant un bâti (3, 3a) comportant une surface d'appui (4, 4a) dont la forme est adaptée à celle dudit support (2), ledit revêtement (1) étant placé au-dessus ou en-dessous dudit support (2), des moyens pour plaquer ledit revêtement (1) sur ledit support (2) ou ledit support (2) sur ledit revêtement (1), l'ensemble étant exposé à au moins un faisceau laser (6) apte à créer le collage du revêtement (1) sur ledit support (2) en plusieurs points (a, b, c,...) répartis sur la surface de contact entre le revêtement (1) et le support (2), lesdits moyens pour plaquer le revêtement (1) sur le support (2), ou le support (2) sur le revêtement (1) comprenant une pellicule transparente au faisceau laser (6).

## Description

La présente invention concerne un dispositif pour fixer un revêtement ou un garnissage sur un support en matière synthétique préalablement formé.

L'invention vise notamment l'application du dispositif précité à l'habillage par un revêtement décoratif, ou de protection, d'accessoires de véhicules automobiles. De tels accessoires peuvent être par exemple les garnitures intérieures des portières d'automobiles, des accoudoirs de sièges ou les tableaux de bord.

On sait que dans les automobiles, les garnitures intérieures sont réalisées en matière composite comprenant un support en matière synthétique préalablement formé recouvert par un revêtement décoratif ou simplement de protection.

Le support de base peut-être en matière plastique telle que le polypropylène ou le polyéthylène qui peuvent être facilement recyclés mais qui présentent un aspect extérieur peu esthétique.

Pour obtenir un aspect esthétique attrayant, on recouvre de tels supports par un revêtement ayant un aspect décoratif tel qu'une matière textile.

Toutefois, les matières plastique telles que polypropylène et polyéthylène sont très difficile à revêtir à cause de leur nature chimique apolaire.

Ainsi, les collages mis en oeuvre actuellement pour fixer le revêtement à de tels supports sont rapidement dégradés dans le temps.

Une autre technique consiste à utiliser la phase de mise en forme du support pour créer un accrochage physique entre les matériaux du composite (surmoulage, thermocompression...). Cependant ces techniques nécessitent des investissements importants, et peuvent détériorer les revêtements mis en oeuvre eu égard aux pressions et températures nécessaires à la mise en forme simultanée des supports.

La technique trouve donc ici des limites qu'on a tenté de repousser grâce à divers traitements de surface comme l'effet corona, l'effet plasma chaud ou froid, l'ajout de primaires, des traitements chimiques acides, des traitements mécaniques...

Ces traitements sont toutefois contraignants, délicats et coûteux.

Pour remédier à ces inconvénients, on a proposé d'effectuer la fixation du revêtement sur le support au moyen d'un faisceau laser.

En effet, un faisceau laser permet de coller le revêtement sur un support dans des conditions particulièrement adaptées à une production industrielle en grande série, autant sur le plan économique que quant à la rapidité de mise en oeuvre et à la fiabilité.

En outre, le collage au moyen d'un faisceau laser peut être entièrement automatisé et consomme peu d'énergie.

En particulier, le faisceau laser peut être réalisé au moyen d'une diode laser dont la puissance ne dépasse pas 80 W. Bien entendu, une puissance supérieure peut être utilisée, en l'utilisant plus brièvement.

Un des problèmes qui se pose dans ce type de technique est qu'un contact intime entre le revêtement et le support doit être obtenu pour obtenir un collage fiable.

Pour résoudre ce problème, on a proposé de disposer l'ensemble formé du revêtement et du support entre un poinçon et une matrice épousant sensiblement la forme de la pièce à obtenir. En outre, cette technique requiert l'utilisation d'une presse pour appliquer un effort suffisant à l'obtention d'un bon contact entre le support et le revêtement pendant le collage.

Toutefois, l'utilisation de cette technique complique la réalisation du collage. En outre, elle en augmente le coût en nécessitant que la matrice ou le poinçon soit transparent au faisceau laser.

Le but de la présente invention est de remédier aux inconvénients des techniques précitées en proposant un dispositif qui permette d'effectuer, au moyen d'un faisceau laser, le collage d'un revêtement sur un support en matière synthétique préalablement formé, et ce en assurant de façon simple un contact intime entre le revêtement et le support. En outre, le dispositif est de mise en oeuvre rapide, économique et fiable.

A cet effet, et selon un premier aspect, l'invention propose un dispositif pour fixer un revêtement sur un support en matière synthétique préalablement formée, mais n'ayant subi aucun traitement de surface préalable, du type comprenant un bâti comportant une surface d'appui dont la forme est adaptée à celle dudit support, ledit revêtement étant placé au-dessus ou en-dessous dudit support, des moyens pour plaquer ledit revêtement sur ledit support ou ledit support sur ledit revêtement, l'ensemble étant exposé à au moins un faisceau laser apte à créer le collage du revêtement sur ledit support en plusieurs points répartis sur la surface de contact entre le revêtement et le support, lesdits moyens pour plaquer le revêtement sur le support ou le support sur le revêtement comprenant une pellicule transparente au faisceau laser.

Selon une première réalisation, la pellicule est formée d'un film en matériau plastique, ledit film étant plaqué par dépression sur ledit revêtement ou sur ledit support.

Selon une deuxième réalisation, et lorsque le revêtement est sensiblement étanche à l'air, la pellicule est formée du revêtement, ledit revêtement étant plaqué par dépression sur ledit support.

Selon une troisième réalisation, la pellicule est formée du support, ledit support étant plaqué sur le revêtement par dépression ou par pression.

La matière thermoplastique utilisée pour réaliser le collage peut être une pellicule thermoplastique placée entre le support et le revêtement.

Dans un premier mode de réalisation de l'invention, le revêtement est placé au-dessus du support et est transparent au faisceau laser, ledit revêtement étant directement en contact avec le support et ce dernier étant en matière thermoplastique pouvant fondre partiellement à l'impact du faisceau laser sur ledit support.

Dans un second mode de réalisation de l'invention, le support est placé au-dessus du revêtement et est transparent au faisceau laser, ledit revêtement étant en matière susceptible de fondre partiellement à l'impact du faisceau laser ou étant recouvert par une couche adjacente au support susceptible de fondre partiellement à l'impact du faisceau laser sur ladite couche.

Selon un deuxième aspect, l'invention propose l'application d'un tel dispositif à l'habillage par un revêtement décoratif, ou de protection, d'accessoires de véhicules automobiles en matière thermoplastique.

D'autres particularités et avantages de l'invention apparaîtront encore dans la description qui suit, faite en référence aux dessins annexés, dans lesquels :
- la figure 1 est une vue en coupe d'un premier mode de réalisation d'un dispositif pour fixer un revêtement sur un support préalablement formé ;
- la figure 2 est une vue analogue à la figure 1 d'un second mode de réalisation du dispositif selon l'invention ;
- la figure 3 est une vue schématique de face d'une garniture intérieure de porte automobile, ladite garniture étant pourvue d'une zone de médaillon recouverte d'un revêtement au moyen d'un dispositif suivant l'invention ;
- les figures 4 à 6 sont des vues schématiques en coupe d'un mode de réalisation d'un dispositif suivant l'invention qui est apte à former la garniture de la figure 3, respectivement dans trois étapes du procédé de fixation du revêtement sur la zone de médaillon ;
- la figure 7 est une vue analogue aux figures 4 à 6 montrant une étape ultérieure du procédé suivant une première réalisation ;
- la figure 8 est une vue analogue aux figures 4 à 6 montrant une étape ultérieure du procédé suivant une deuxième réalisation.

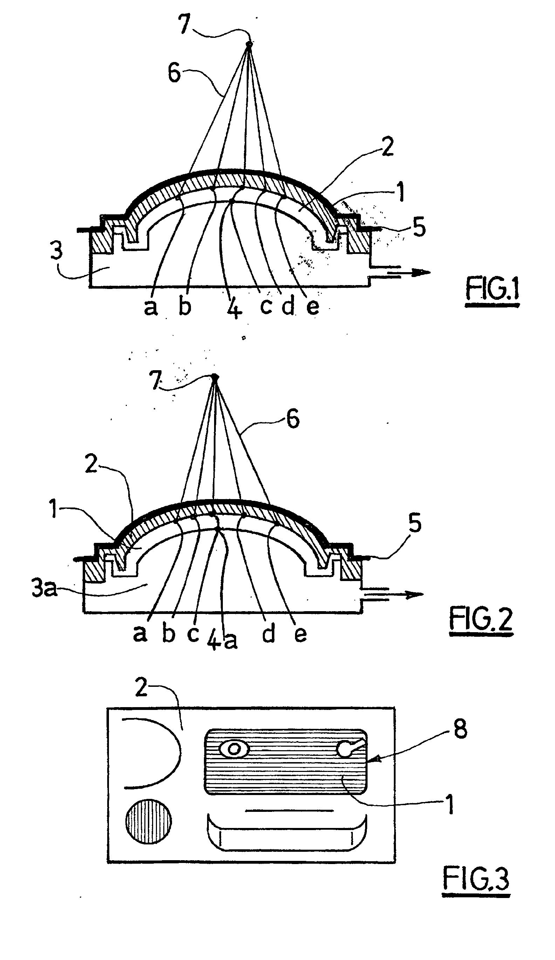

Les figures 1 et 2 représentent toutes les deux, un dispositif pour fixer un revêtement 1 sur un support en matière synthétique préalablement formé. Ce dispositif comprend dans les deux cas un bâti 3, 3a comportant une surface d'appui 4, 4a dont la forme est adaptée à celle du support 2, le revêtement 1 étant placé au-dessus ou en-dessous du support 2. Par ailleurs, des moyens sont prévus pour plaquer le revêtement 1 sur le support 2 ou le support 2 sur le revêtement 1.

L'ensemble est exposé à au moins un faisceau laser 6, apte à créer le collage par fusion du revêtement 1 sur ledit support 2 en plusieurs points a, b, c, d, e répartis sur la surface de contact entre le revêtement 1 et le support 2. Les moyens pour plaquer le revêtement 1 sur le support 2 ou pour plaquer le support 2 sur le revêtement 1 sont transparents au faisceau laser 6, ce qui veut dire qu'ils peuvent être traversés par ce dernier, sans subir d'échauffement notable.

En revanche, la matière qui doit fondre à l'impact du faisceau laser 6 doit pouvoir s'échauffer. Ce résultat est obtenu, si cette matière renferme une proportion suffisante de pigments minéraux tels que du noir de carbone.

La matière pouvant fondre sous l'effet du faisceau laser 6 peut être une pellicule thermoplastique placée entre le support 2 et le revêtement 1.

Dans le mode de réalisation de la figure 1, le revêtement 1 est placé au-dessus du support 2 et est transparent au faisceau laser 6. Ce revêtement 1 est directement en contact avec le support 2. Ce dernier est en matière thermoplastique telle que du polypropylène et peut fondre partiellement à l'impact du faisceau laser 6 sur le support 2.

Dans le mode de réalisation de la figure 2, le support 2 est placé au-dessus du revêtement 1 et est transparent au faisceau laser 6. Dans ce cas le revêtement 1 est en matière thermoplastique susceptible de fondre partiellement à l'impact du faisceau laser 6 ou est recouvert par une couche thermoplastique adjacente au support 2 susceptible de fondre partiellement à l'impact du faisceau laser 6 sur cette couche.

Dans les deux cas, le bâti 3, 3a peut être en résine moulée. Dans les exemples représentés sur les figures 1 et 2, les moyens pour plaquer le revêtement 1 sur le support 2 ou le support 2 sur le revêtement 1 comprennent une pellicule formée d'un film 5 en matériau plastique qui est transparent au faisceau laser 6.

Le film 5 est plaquée par dépression sur le revêtement 1 ou le support 2. A cet effet, un dispositif de tirage sous vide est prévu pour appliquer cette dépression, par exemple formé d'une pompe reliée à un conduit prévu dans le bâti 3, 3a de sorte à aspirer le film 5. On peut également prévoir des moyens pour assurer l'étanchéité, par exemple par pression, de la périphérie du film 5 sur la périphérie du revêtement 1 ou du support 2.

Ainsi, le film 5 qui est prévu pour être suffisamment souple pour épouser la forme du revêtement 1 et du support 2 permet de réaliser un contact intime entre ces deux éléments.

Selon une autre réalisation, et lorsque le revêtement 1 est sensiblement étanche à l'air, on peut prévoir que ledit revêtement serve de pellicule. A cet effet, le revêtement 1 est plaqué sur le support 2 par dépression, par exemple au moyen de dispositif de tirage sous vide analogue à celui prévu ci-dessus.

Le revêtement 1 peut être une matière textile dont la face en contact avec le support est revêtue d'une couche en matière thermoplastique.

Dans les exemples illustrés par les figures 1 et 2, la source laser 7 émet simultanément ou séquentiellement plusieurs faisceaux laser pour réaliser le collage du revêtement 1 sur le support 2 en plusieurs points a, b, c, d, e.

En variante, il peut être prévu un faisceau laser unique associé à des moyens pour déplacer ce faisceau pour réaliser le collage du revêtement 1 sur le support 2 en plusieurs points ou suivant plusieurs lignes de collage.

Le ou les faisceaux laser 6 peuvent être émis par des diodes laser ayant chacune une puissance comprise entre 50 et 80 W.

A titre d'exemple non limitatif, le support 2 peut être un panneau intérieur d'habillage en polypropylène ou en acrylonitrile, butadiène, styrène, d'une portière d'automobile et le revêtement 1 un tissu, une couche textile non tissée ou une moquette ou une pellicule imitant le cuir ou le velours.

Le dispositif selon l'invention offre également la possibilité de gainer partiellement le support thermoplastique, de manière à permettre la réalisation d'une gamme complète de garnitures à partir d'un même et unique moule.

En effet, il devient possible sur la base d'un moule apte au moulage par bi-injection de fabriquer :
- pour les véhicules de bas de gamme, de pièces sans revêtement, mais de coloris divers, en particulier dans la zone de médaillon d'une garniture de portière,
- pour les gammes supérieures, plus riches, des supports dont la partie décorative (zone de médaillon) sera injectée en matière perméable au laser, et donc apte à être enrichie, par exemple par un tissu, par le principe de soudure laser.

On décrit ci-après, le mode opératoire pour recouvrir la zone médaillon 8 (cf. figure 3) d'une garniture 2 intérieure de porte d'automobile par un revêtement 1 en textile ou analogue.

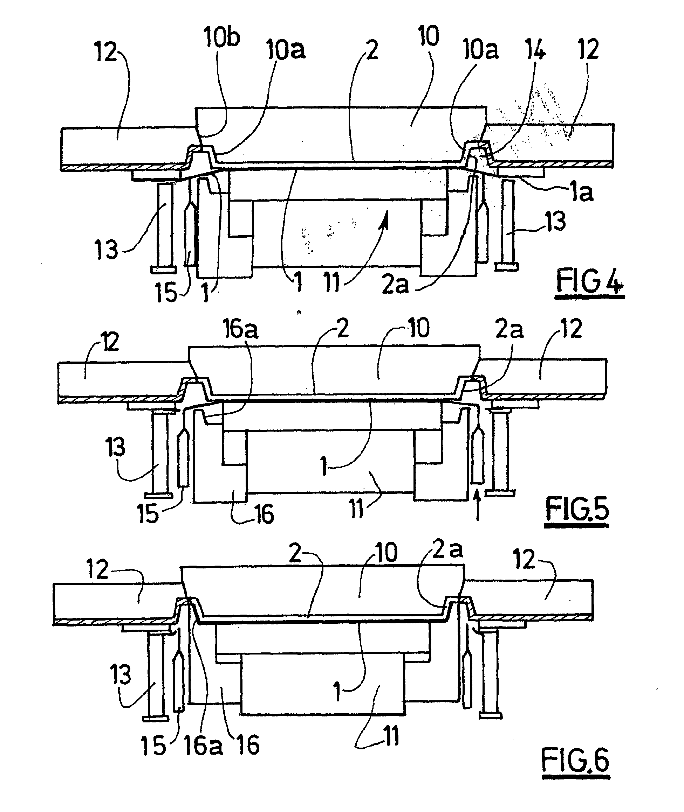

Ce mode opératoire met en oeuvre le dispositif représenté sur les figures 4 à 8.

Ce dispositif comprend un bloc supérieur 10 et un bloc inférieur 11.

Comme on le voit sur les figures 4, 5, 6, la garniture 2 en matière plastique est plaquée contre la face inférieure du bloc supérieur 10 et partiellement contre les faces latérales 10a de ce bloc.

Le bloc inférieur 11 plaque contre la garniture 2, un tissu 1 que l'on veut fixer sur la zone médaillon 8 de la garniture.

Le bloc supérieur 10 est bordé latéralement par des blocs périphériques 12 qui sont en appui contre les faces inclinées 10b du bloc supérieur 10.

Comme indiqué sur la figure 4, la périphérie du tissu 1 est plaquée contre les blocs périphériques 12 par des serre-flancs 13.

Dans la position indiquée sur la figure 4, il existe un espace libre 14 entre le tissu 1 et la partie périphérique 2a de la garniture 2.

Dans la deuxième phase représentée sur la figure 5, on découpe la périphérie du tissu 1 au moyen d'une lame chaude 15.

Dans la troisième phase représentée sur la figure 6, on plaque la partie périphérique du tissu 1 contre la partie périphérique 2a de la garniture 2 au moyen de blocs périphériques inférieurs 16 dont l'extrémité supérieure 16a épouse le profil de la partie périphérique 2a de la garniture 2.

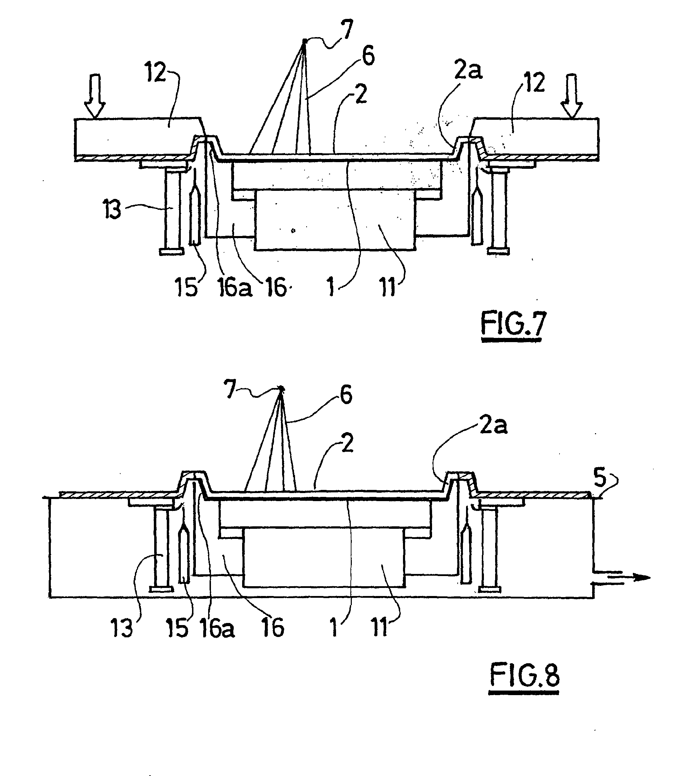

Suivant une première réalisation (figure 7), le bloc 10 est ensuite retiré de sur la garniture 2, les blocs périphériques 12 étant maintenu en pression sur la périphérie de ladite garniture 2 qui ne doit pas être recouverte de tissu 1.

Cette réalisation utilise la garniture 2 comme pellicule des moyens pour plaquer le revêtement 1 sur le support 2. En effet, suivant cette réalisation, et de même que dans la réalisation utilisant un film 5, la pellicule à pour fonction d'assurer le placage du revêtement 1 sur le support 2.

Et, l'application d'une pression sur la périphérie de la garniture 2 permet d'assurer un contact intime entre le revêtement 1 et la garniture 2 au niveau de la zone médaillon 8.

En variante, et comme décrit en relation avec les figures 1 et 2, la garniture 2 peut être appliquée sur le tissu 1 par dépression au moyen d'une pompe à vide.

Suivant une réalisation (figure 8), les blocs 12 sont également retirés de sur la périphérie de la garniture 2 puis un film 5 est disposé au moins sur la partie de la garniture 2 devant être recouvert avec le tissu 1. De même que dans les modes de réalisation représentés sur les figures 1 et 2, le film 5 est ensuite plaqué sur la garniture 2 par dépression de sorte à assurer un contact intime entre le tissu 1 et la garniture 2.

Dans une phase ultérieure de ces deux réalisations, on procède au collage du tissu 1 sur la garniture 2, au moyen de faisceaux laser, comme expliqué précédemment.

## Revendications

1. Dispositif pour fixer un revêtement (1) sur un support (2) en matière synthétique préalablement formée, mais n'ayant subi aucun traitement de surface préalable, du type comprenant un bâti (3, 3a) comportant une surface d'appui (4, 4a) dont la forme est adaptée à celle dudit support (2), ledit revêtement (1) étant placé au-dessus ou en-dessous dudit support (2), des moyens pour plaquer ledit revêtement (1) sur ledit support (2) ou ledit support (2) sur ledit revêtement (1), l'ensemble étant exposé à au moins un faisceau laser (6) apte à créer le collage du revêtement (1) sur ledit support (2) en plusieurs points (a, b, c,...) répartis sur la surface de contact entre le revêtement (1) et le support (2), **caractérisé en ce que** lesdits moyens pour plaquer le revêtement (1) sur le support (2) ou le support (2) sur le revêtement (1) comprennent une pellicule transparente au faisceau laser (6).

2. Dispositif selon la revendication 1, **caractérisé en ce que** la pellicule est formée d'un film en matériau plastique (5), ledit film étant plaqué par dépression sur ledit revêtement (1) ou sur ledit support (2).

3. Dispositif selon la revendication 1, **caractérisé en ce que** le revêtement étant sensiblement étanche à l'air, la pellicule est formée du revêtement (1), ledit revêtement étant plaqué par dépression sur ledit support (2).

4. Dispositif selon la revendication 1, **caractérisé en ce que** la pellicule (5) est formée du support (2), ledit support étant plaqué sur le revêtement (1) par dépression ou par pression.

5. Dispositif selon l'une quelconque des revendications 1 à 4, **caractérisé en ce qu'**il comprend une pellicule thermoplastique placée entre le support (2) et le revêtement (1).

6. Dispositif selon l'une quelconque des revendications 1 à 3, **caractérisé en ce que** le revêtement (1) est placé au-dessus du support (2) et est transparent au faisceau laser (6), ledit revêtement (1) étant directement en contact avec le support (2) et ce dernier étant en matière thermoplastique pouvant fondre partiellement à l'impact du faisceau laser (6) sur ledit support (2).

7. Dispositif selon l'une quelconque des revendications 1 à 4, **caractérisé en ce que** le support (2) est placé au-dessus du revêtement (1) et est transparent au faisceau laser (6), ledit revêtement (1) étant en matière susceptible de fondre partiellement à l'impact du faisceau laser (6) ou étant recouvert par une couche adjacente au support (2) susceptible de fondre partiellement à l'impact du faisceau laser (6) sur ladite couche.

8. Dispositif selon l'une quelconque des revendications 1 à 7, **caractérisé en ce que** ledit revêtement (1) est en matière textile.

9. Dispositif selon l'une quelconque des revendications 1 à 8, **caractérisé en ce qu'**il comprend plusieurs faisceaux laser (6) séparés émis simultanément pour réaliser le collage du revêtement (1) sur le support (2) en plusieurs points (a,b,c,...).

10. Dispositif selon l'une quelconque des revendications 1 à 9, **caractérisé en ce qu'**il comprend un faisceau unique associé à des moyens pour déplacer ce faisceau pour réaliser le collage du revêtement (1) sur le support (2) en plusieurs points ou suivant plusieurs lignes de collage.

11. Dispositif selon l'une quelconque des revendications 1 à 10, **caractérisé en ce que** le ou les faisceaux laser (6) sont émis par des diodes laser.

12. Dispositif selon l'une quelconque des revendications 1 à 11, **caractérisé en ce qu'**il est apte à fixer sur le support (2) un revêtement (1) recouvrant une zone réduite (8) dudit support (2).

13. Dispositif selon la revendication 12, **caractérisé en ce qu'**il comprend des moyens pour plaquer le revêtement (1) sur le support (2) dans la zone (8), des moyens pour maintenir la périphérie (1a) du tissu (1) libre par rapport à la partie périphérie (2a) du support (2), des moyens pour découper le tissu dans la zone libre ci-dessus et des moyens pour plaquer la périphérie du tissu contre la partie périphérique (2a) du support (2).

14. Application du dispositif selon l'une quelconque des revendications 1 à 13 à l'habillage par un revêtement décoratif, ou de protection, d'accessoires de véhicules automobiles en matière thermoplastique.
